# EUROPÄISCHE PATENTSCHRIFT

(11) **EP 0 797 693 B1**
(45) Veröffentlichungstag und Bekanntmachung des Hinweises auf die Patenterteilung: **09.06.1999**
(21) Anmeldenummer: 95940156.3
(22) Anmeldetag: 06.12.1995
(51) Int. Cl.: C25D 7/10, C25D 3/56, F16C 33/12

(54) **SCHICHTWERKSTOFF FÜR GLEITELEMENTE SOWIE VERFAHREN UND MITTEL ZU SEINER HERSTELLUNG**
LAMINATED MATERIAL FOR SLIDING COMPONENTS AND METHOD AND MEANS FOR ITS PRODUCTION
MATERIAU STRATIFIE POUR ELEMENTS DE GLISSEMENT AINSI QUE PROCEDE ET AGENTS UTILISES POUR LE PRODUIRE

(30) Priorität: 09.12.1994 DE 4443806
(43) Veröffentlichungstag der Anmeldung: 01.10.1997
(73) Patentinhaber: Federal-Mogul Wiesbaden GmbH, 65201 Wiesbaden (DE); BLASBERG OBERFLÄCHENTECHNIK GMBH, 42699 Solingen (DE)
(72) Erfinder: STASCHKO, Klaus, D-65510 Idstein (DE); HUHN, Hans-Ulrich, D-65388 Schlangenbad (DE); MÜLLER, Klaus, D-65207 Wiesbaden (DE); HEYER, Joachim, D-53819 Neunkirchen-Seelscheid (DE)
(86) Internationale Anmeldenummer: DE9501760
(87) Internationale Veröffentlichungsnummer: WO9617980

(56) Entgegenhaltungen:
- GB-A- 2 256 235
- GB-A- 2 256 903
- GB-A- 2 257 759

## Beschreibung

Die Erfindung betrifft einen Schichtwerkstoff für Gleitelemente, der mindestens einen Stützkörper und eine Laufschicht aus Blei-Bronze aufweist. Die Erfindung betrifft auch ein Verfahren zur Herstellung von Gleitelementen gemäß dem Oberbegriff des Patentanspruchs 4, bei dem auf das vorgefertigte Halbzeug eine Laufschicht aus Blei-Zinn-Kupfer galvanisch aufgebracht wird, sowie Mittel zur Durchführung des Verfahrens.

Unter Gleitelementen werden alle Arten von Lagerschalen sowie u.a. Kolben und Kolbenringe verstanden. Laufschichten von Schichtwerkstoffen für Gleitelemente werden meist durch Galvanisierung in entsprechenden Elektrolytbädern hergestellt. Hierzu wurden bisher meist fluoroborathaltige Bäder verwendet, die jedoch eine Reihe von Nachteilen aufweisen.

Beim Gebrauch der Bäder treten durch organische Bestandteile und Zinnoxidation zwangsläufig Verunreinigungen auf, die die Qualität der galvanischen Schicht beeinträchtigen. In der Regel setzen sich diese Verunreinigungen aufgrund ihres größeren Gewichtes am Boden der Wanne ab und beeinflussen die galvanische Beschichtung so lange nicht, solange das Bad nicht bewegt wird. Wenn jedoch das Bad aus diesen Gründen nicht umgewälzt werden darf, tritt ein Konzentrationsgefälle der für die Beschichtung vorgesehenen Metallionen auf. Da die zu beschichtenden Gleitelemente, wie z.B. Lagerschalen, in Aufnahmen übereinandergestapelt sind, konnte es zwangsläufig zu einer Zunahme der Schichtdicke von oben nach unten kommen.

Derartige Konzentrationsgefälle könnten durch ein ständiges Bewegen des Bades verhindert werden, was allerdings voraussetzen würde, daß keine Verunreinigungen aufgewirbelt werden bzw. daß das Bad filtrierbar ist. Das vierwertige Zinnoxid, das in den Fluoroboratbädern vorhanden ist, ist jedoch meist nicht filtrierbar. Außerdem würde die unerwünschte Zinnoxydation durch die erhöhte Sauerstoffzufuhr aus der Luft noch gefördert werden.

Ein weiterer Nachteil bekannter Bäder besteht darin, daß trotz vorgesehener Räuberkathode im Galvanisierbad eine stromlose Abscheidung von Lagermetallen auf dem Lagerrücken während des Galvanisierprozesses nicht verhindert werden kann. Bedingt durch die hohen Kupferkonzentrationen, beispielsweise in Elektrolyten für Ternärschichten, wird auf dem Lagerrücken der Lagerschalen stromlos unkontrolliert Kupfer abgeschieden, was als Zementation bezeichnet wird. Diese Kupferschicht hat nur bedingt Bindung zum Stahlrücken und neigt deshalb nach dem Verzinnen zur Bläschenbildung und zum Abblättern. Damit ist einerseits ein Materialverlust verbunden und andererseits kann durch das Abblättern der Zementationsschicht die Funktionsfähigkeit des Lagers beeinträchtigt werden.

Die eingesetzten Stromdichten sind bei den bekannten Galvanisierbädern auf 2,2 A/dm² begrenzt. Höhere Stromdichten verkürzen zwar den Galvanisiervorgang, aber die Abscheidungsraten der Metalle divergieren innerhalb der Lagerschalenoberfläche und Aufnahmesäule, so daß die abgeschiedene Schicht nicht mehr die gewünschte Zusammensetzung aufweist. Eine stabile Abscheidung ist daher bei höheren Stromdichten nicht möglich.

Die mit den bekannten Bädern hergestellten Laufschichten, insbesondere Ternärschichten, zeigen z.T. erhebliche Dickenschwankungen, die u.U. eine mechanische Nachbearbeitung erforderlich machen. Außerdem ist das Zinn in der Laufschicht nicht gleichmäßig verteilt, so daß es zu Anhäufungen und grobkristallinen Abscheidungen, sogenannten Zinnagglomerationen kommt. Diese inhomogene Struktur der Laufschicht begünstigt die Zinndiffusion, die bei stärkerer Erwärmung des Gleitelementes im Betrieb auftritt, so daß derartige Laufschichten nur auf einer Zwischenschicht, wie z.B. eines Nickeldamms aufgebracht werden können, der die Zinndiffusion in die darunterliegende Bleibronzeschicht verhindert, wie beispielsweise in E. Römer "Werkstoff und Schichtaufbau bei Gleitlagern", Sonderdruck aus ZFW Zeitschrift für Werkstofftechnik, Jahrgang 4, Heft 7, Verlag Chemie Weinheim/Bergstraße 1973 beschrieben wird. Nur durch diese zusätzliche Maßnahme konnte bisher die Korrosionsfestigkeit verbessert und Ablösungserscheinungen der Laufschicht vermieden werden, die zu Lagerschäden führen können. Darüber hinaus ist die Härte dieser bekannten Laufschichten und somit die Verschleißfestigkeit nicht zufriedenstellend.

Aus der GB 2 256 903 ist ein Gleitelement bekannt, das eine Oberflächenschicht aus einer Bleilegierung enthaltend 8 Gew.% Sn und 2 Gew.% Cu mit einer Gleitfläche für ein Gegenelement umfaßt. Die Oberflächenschicht enthält einen zu einem kubischen System gehörenden Metallkristall mit einer durch Miller-Indices (h00) gegebenen gegen die Gleitfläche zu deren Bildung gerichteten Ebene. Der Prozentbereich der (h00)-Ebene in der Gleitfläche ist auf einen Bereich von a ≥ 50% eingestellt. Die durch stengelförmige Kristalle gebildete Gleitschicht weist porenartige Zwischenräume zwecks Ölspeicherung auf. Die Gleitschicht kann mit einer körnigen, ebenfalls öldurchlässigen Schicht versehen sein. Über die Zinnverteilung in diesen Schichten werden keine Aussagen gemacht.

Die GB 2 256 235 und die GB 2 257 759 beschreiben ähnlich ausgestaltete Oberflächenschichten mit stengelförmigen Kristallen. Hierbei kommt es unter anderem auf den Neigungswinkel der pyramidenförmigen Kristalle an, wobei ebenfalls keine Aussagen zur Zinnverteilung in den betreffenden Gleitschichten gemacht wird.

Die mit den herkömmlichen Galvanisierbädern verbundene inhomogene Struktur der Laufschicht wurde bei dem Verfahren gemäß der DE 41 03 117 C2 gezielt zur Diffusion ausgenutzt. Auf eine Trägerschicht wurde eine Schicht aus binärer oder ternärer Basislegierung mit einem geringeren Zinnanteil galvanisch aufgebracht, als er erwünscht war. Auf diese Schicht wurde dann eine weitere Schicht mit einem deutlich höheren Zinngehalt aufgebracht. Durch eine zeitlich gesteuerte Thermodiffusionsbehandlung wurde das Zinn in die Basislegierung eindiffundieren lassen, bis es in dem gewünschten Mengenanteil an der späteren Lauffläche verteilt war. Da auch nach der Thermobehandlung die inhomogene und grob kirstalline Struktur der Laufschicht noch vorhanden ist, können sich die Diffusionsvorgänge in der Betriebsphase des Gleitelements fortsetzen. Um negative Einflüsse an der Grenzschicht zur Trägerschicht zu verhindern, ist daher eine Diffusionssperrschicht vorgesehen.

Aus der DE-OS 27 22 144 ist die Verwendung einer Legierung mit mehr als 6 bis 10 Gew.-% Kupfer, 10 bis 20 Gew.-% Zinn, Rest Blei als Weichmetallagerlegierung für Mehrschichtgleitlager bekannt. Diese Legierung kann u.a. durch galvanische Abscheidung aufgebracht werden, wobei eine Nickelzwischenschicht als Diffusionssperre vorgesehen ist. Diese bekannte Legierung, die mit herkömmlichen Elektrolytbädern hergestellt wird, zeigt eine grobe Verteilung des Zinns.

In "Galvanisches Abscheiden von Zinn-Blei aus Fluoroborat und fluoroboratfreien Elektrolyten" von H. van der Heijden in "Metalloberfläche" 39 (1985) 9, Seite 317 bis 320 wird das Beschichten von Elektronikkomponenten beschrieben. Es hat sich gezeigt, daß Zinn und Blei in verschiedenen organischen Sulfonsäuren mit der allgemeinen Formel RSO₁H gut lösbar sind, wobei R eine Alkylgruppe darstellt. Die Sulfonsäuren werden als völlig stabil während der Elektrolyse beschrieben. Die Anwendung derartiger fluoroboratfreier Bäder für die galvanische Beschichtung von Gleitelementen wird ebensowenig erwähnt, wie die Angabe von geeigneten und für die Herstellung von Gleitelementen notwendigen Zusatzstoffen.

Aus der DE 39 02 042 A1 sind wässrige, saure Lösungen für die elektrolytische Abscheidung von Zinn und/oder Blei/Zinnlegierungen bekannt. Diese binären Galvanisierbäder werden als Korrosionsschutz, z.B. für Leiterplatten und Batterien eingesetzt, wobei eine relativ weiche Schicht abgeschieden wird, die nicht verschleißfest und somit auch nicht für Gleitelemente einsetzbar ist. Neben Metallsalzen, Inhibitoren und freier Alkansulfonsäure weisen diese bekannten Galvanisierbäder Glanzbildner auf, die den Einsatz dieser Bäder beispielweise als Ternärbäder unmöglich machen.

Es hat sich gezeigt, daß bei einer Zugabe von beispielsweise Kupfersalzen jeweils nur maximal 1% Kupfer abgeschieden werden kann, weil die Badzusammensetzung im wesentlichen auf das Zinn abgestimmt ist.

In der JP 02-93 096 A (Pat. Abstr. of Japan, C-732, Vol. 14/No. 294) wird ein Verfahren zur Herstellung von Gleitelementen beschrieben, bei dem die Laufschicht aus Pb-Sn-Cu auf das vorgefertigte Halbzeug galvanisch aufgebracht wird. Hierzu wird zwar ein fluorboratfreier Elektrolyt ohne Glanzbildner mit freier Alkylsulfonsäure sowie nicht-ionischen Netzmitteln verwendet. Mit diesen bekannten Galvanisierbädern wird aber ebenfalls nur eine grobe Abscheidung des Zinns erreicht, wobei der Schichtaufbau meist unregelmäßig ist. Die an Gleitlager gestellten hohen Anforderungen werden nicht zur vollen Zufriedenheit erfüllt.

Die für die Herstellung von Gleitelementen notwendigen Zusatzstoffe werden nicht genannt, so daß letztendlich auch nur Stromdichten bis 3 A/dm² einsetzbar sind.

Aufgabe der Erfindung ist daher ein Schichtwerkstoff, dessen Laufschicht eine größere Härte und verbesserte Verschleißfestigkeit aufweist, sowie ein Verfahren zur Herstellung solcher Laufschichten, das zu einer verbesserten Qualität der galvanischen Schichten führt, wobei die Standzeit der verwendeten Bäder größer sein soll. Schließlich besteht die Aufgabe auch darin, ein Mittel zur Durchführung des Verfahrens zur Verfügung zu stellen.

Diese Aufgabe wird mit einem Schichtwerkstoff gemäß den Merkmalen des Patentanspruchs 1 bzw. mit einem Verfahren gemäß den Merkmalen des Patentanspruchs 4 sowie mit einem Mittel gemäß Anspruch 12 gelöst.

Die feinkristalline Abscheidung des Zinns in vollständig homogener Verteilung bedeutet, daß keine lokalisierbaren Zinnverballungen mehr vorliegen. Das feinverteilte Zinn ist in elektronenmikroskopischen Aufnahmen mit bis zu 1000-fächer Vergrößerung nicht als Partikel mit definiertem Durchmesser identifizierbar. Es gibt in der Laufschicht deutlich weniger Gitterfehler und keinen Einbau von störenden Fremdatomen, so daß die Packungsdichte weitaus höher ist als bei bekannten Pb-Sn-Cu-Laufschichten. Daraus resultiert eine größere Härte der Laufschicht, die beim erfindungsgemäßen Schichtwerkstoff bei 10 bis 50 HV liegt, sowie eine größere Verschleißfestigkeit. Die Härte liegt für eine vorgegebene Zusammensetzung jeweils um mindestens 20% höher als bei herkömmlichen Laufschichten gleicher Legierungszusammensetzung.

Es hat sich gezeigt, daß diese feinkristalline Abscheidung des Zinns mit vollständig homogener Verteilung dann gewährleistet ist, wenn der Anteil des Zinns 8 bis 18,5 Gew.-% und der des Kupfers 2 bis 16 Gew.-% beträgt, wobei der Rest aus Blei besteht.

Weiterhin wurde überraschend festgestellt, daß die Diffusion des Zinns, die im Betrieb der aus solchen Schichtwerkstoffen hergestellten Gleitlagern üblicherweise aufgrund der Temperaturerhöhung auftritt, weit weniger oder gar nicht zu beobachten ist. Auch dieser vorteilhafte Effekt ist auf die feinkristalline Abscheidung des Zinns zurückzuführen, die offensichtlich die Beweglichkeit des Zinns so weit einschränkt, daß nur geringe Diffusionseffekte auftreten können. Es kann somit auf eine Zwischenschicht wie z.B. einen sogenannten Nickeldamm verzichtet werden. Wenn die Laufschicht die Ternärschicht eines Mehrschichtwerkstoffes bildet, kann sie vorzugsweise direkt auf der Blei-Bronze-Schicht aufgebracht werden, die sich innerhalb der Stahlstützschale befindet.

Das Verfahren zur Herstellung von aus solchen Schichtwerkstoffen hergestellten Gleitelementen ist dadurch gekennzeichnet, daß im Galvanisierbad ein eine Karbonsäure aufweisendes Kornverfeinerungsmittel und ein Fettsäureglykolester verwendet wird. Es hat sich gezeigt, daß erst durch den Einsatz des Kornverfeinerungsmittels eine feinkristallie Abscheidung möglich ist, die Diffusionsvorgänge des Zinns unterbindet. Der Fettsäureglykolester beeinflußt in positiver Weise die Gleichmäßigkeit der Abscheidung. Während bei den bekannten Verfahren in den Randbereichen von Nuten, Bohrungen und dergleichen deutliche Erhöhungen auftraten, so sind diese jetzt nicht mehr feststellbar. Offensichtlich hat der Fettsäureglykolester einen Einfluß auf die Ionenverteilung im Galvanisierbad, was letztendlich auch zu einer gleichmäßigeren Abscheidung führt. Es hat sich gezeigt, daß nicht nur die Dickenschwankungen vermieden werden können, sondern daß auch die Oberflächenrauhigkeit deutlich abnimmt.

Das Galvanisierbad weist vorzugsweise eine Methansulfonsäure auf.

Eine bevorzugte Badzusammensetzung enthält außer den abzuscheidenden Metallen 30 - 200 g/l-freie Methansulfonsäure, 5 - 125 ml/l nicht-ionische Netzmittel, 5 - 25 ml/l Kornverfeinerungsmittel und 0,01 bis 1 g/l Fettsäureglykolester.

Durch das Weglassen der Glanzbildner, die jedoch in herkömmlichen fluorboratfreien Bädern enthalten sind, und durch die Zugabe von nichtionischen Netzmitteln ist es möglich geworden, Kupfer in Blei-Zinn-Legierungen in der jeweils gewünschten Menge abzuscheiden.

Als nicht ionische Netzmittel werden Arylpolyglykolether und/oder Alkylarylpolyglykolether verwendet.

Die erfindungsgemäßen Galvanisierbäder zeichnen sich durch hohe Stabilität aus, da sich die Alkylsulfonsäure während der Elektrolyse nicht zersetzt. Man erhält dadurch eine gleichmäßige, nahezu 100%-ige Stromausbeute sowohl an der Kathode als auch an der Anode.

Durch den Einsatz der nicht-ionischen Netzmittel wird die Kupferabscheidung auf dem Lagerrücken so stark reduziert, daß sie vernachlässigbar ist.

Um kein Konzentrationsgefälle im Galvanisierbad entstehen zu lassen, wird das Galvanisierbad vorzugsweise ständig umgewälzt. Die Umwälzung des Galvanisierbades wird vorzugsweise während des Galvanisierprozesses mit einer Filtration gekoppelt, so daß im Galvanisierbad enthaltene Verunreinigungen fortlaufend entfernt werden. Die Filtration des Galvanisierbades wird dadurch ermöglicht, daß die verwendeten Netzmittel filtrierbar sind und eine Zinnoxidation nur in geringen Grenzen stattfindet.

Durch die Umwälzung und Filtration konnte die Qualität der Beschichtung erheblich gesteigert werden. Die Dickenschwankungen der aufgebrachten galvanischen Schicht in der Lagersäule von unten nach oben und die Fehlstellen in der Beschichtung konnten erheblich reduziert werden. Außerdem hat sich gezeigt, daß die erfindungsgemäßen Galvanisierbäder fast über eine unbegrenzte Zeit eingesetzt werden konnten, insbesondere auch dann, wenn hohe Konzentrationen an abzuscheidenden Metallen im Galvanisierbad enthalten waren.

Vorzugsweise können während der Galvanisierung Stromdichten von 2 bis zu 20 A/dm² eingesetzt werden. Hierbei konnten keine Veränderungen in der Zusammensetzung der Beschichtung festgestellt werden. Durch den Einsatz derart hoher Stromdichten wird der Vorteil einer schnellen Abscheidung erzielt. Es ist daher möglich, die Prozeßdauer fast um einen Faktor 10 zu senken. Das neue Verfahren eignet sich daher auch für die Hochgeschwindigkeitsabscheidung und damit für die Bandgalvanisierung. Es ist somit möglich, eine Großserienfertigung mit hohem Durchsatz einzurichten.

Das Galvanisierbad wird vorzugsweise auf einer Temperatur unter 25°C gehalten, weil anderenfalls keine kontrollierte Abscheidung mehr möglich ist.

Da sich während des Galvanisiervorgangs das Bad erwärmt, muß es entsprechend gekühlt werden.

Das Mittel zur Durchführung des Verfahrens besteht aus einem Galvanisierbad, das 50 - 100 g /l Blei als Blei-Methansulfonat, 6 bis 20 g/l Zinn als Zinn-Methansulfonat, 2 bis 16 g/l Kupfer als Kupfer-Methansufonat, 30 bis 200 g/l freie Methansulfonsäure und 5 bis 125 ml/l nicht ionische Netzmittel, 5 - 25 ml/l Kornverfeinerungsmittel und 0,01 - 1 g/l eines Fettsäureglykolesters, aber keine Glanzbildern enthält. Die nicht ionischen Netzmittel sind vorzugsweise Arylpolyglykolether und/oder Alkylarylpolyglykolether mit der Formel CₙH₍ₙ₊₁₎-Ar-(OCH₂-CH₂)ₘ-OCH₂-CH₃, in der n = 0 bis 15, m = 5 - 39 und Ar einen aromatischen Rest darstellt. Das Kornverfeinerungsmittel weist vorzugsweise eine α-β-ungesättigte Karbonsäure auf mit der allgemeinen Formel 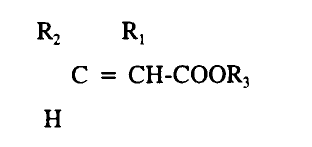 in der R₁ und R₂ gleich oder verschieden sind und Wasserstoff oder Niederalkylgruppen mit 1 bis 3 C-Atomen und R₃ Wasserstoff oder Niederalkyl mit 1 bis 5 C-Atomen darstellt. Der Anteil des Arylpolyglykolethers und/oder des Alkylarylpolyglykolethers liegt vorzugsweise bei 40 - 100 ml/l und der des Kornverfeinerungsmittels bei 5 - 15 ml/l.

Beispielhafte Ausführungsformen werden nachfolgend anhand der Figuren näher erläutert.

Es zeigen:
- Figuren 1a, b: elektronenmikroskopische Aufnahmen eines Schichtwerkstoffes nach dem Stand der Technik und gemäß der Erfindung, und
- Figuren 2a, b: zwei Diagramme, die die Oberflächenrauhigkeit einer Laufschicht nach dem Stand der Technik und gemäß der Erfindung darstellen.

In der nachfolgenden Tabelle sind bevorzugte Badzusammensetzungen, Stromdichten und die erhaltenen Ternärschichten auf einem Gleitlager, das aus einem Stahlträger und einer Blei-Bronze-Schicht besteht, zusammengefaßt. Inhibitor N bezeichnet ein Netzmittel auf der Basis Alkylarylpolyglykolether und Inhibitor L einem Zusatz, der außer ca. 30% Karbonsäure bis zu einem Drittel Arylpolyglykolester und/oder Alkylarylpolyglykolether aufweist, wobei der Rest aus Wasser besteht. Diese Netzmittel werden beispielsweise unter dem Handelsnamen BN 160308 Stannostar HMB bzw. BN 160309 Stannostar HMB der Fa. Blasberg/Solingen vertrieben. Der Anteil des Fettsäurepolyglykolesters liegt bei allen Badzusammensetzungen bei 0,02 g/l. Es ist zu erkennen, daß die Härtewerte alle im Bereich von 10 - 50 HV und somit deutlich über den Härtewerten herkömmlicher Ternärschichten liegen.

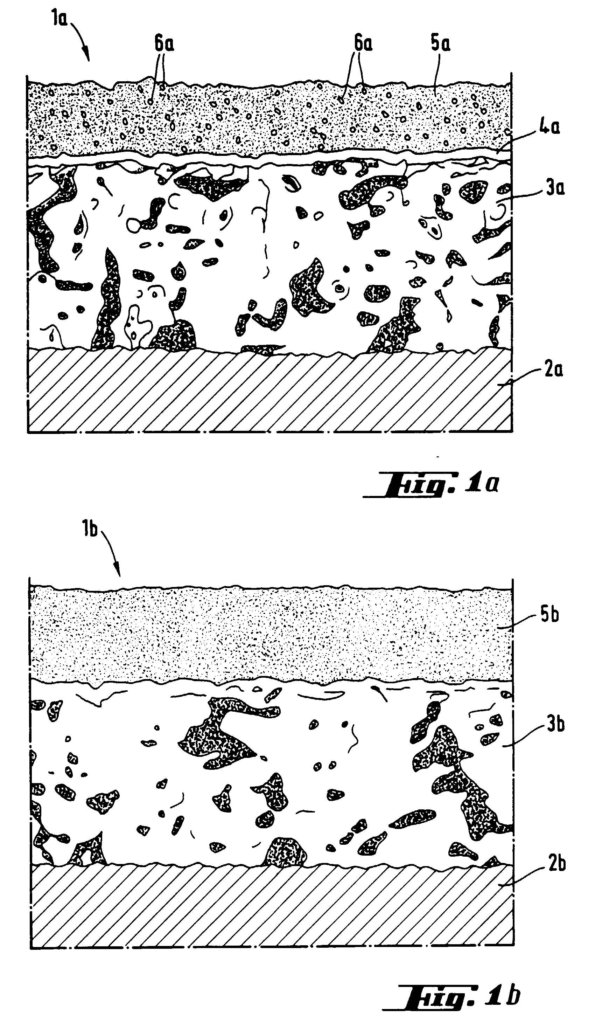

In den Figuren 1a und 1b sind zwei Schliffbilder dargestellt, wobei die Figur 1a einen Schichtwerkstoff nach dem Stand der Technik und die Figur 1b einen solchen gemäß der Erfindung zeigt.

In der Figur 1a ist ein Schichtwerkstoff la dargestellt, der aus einem Stahlrücken 2a einer Blei-Bronze-Schicht 3a, einem Nickeldamm 4a und einer Ternärschicht 5a besteht. Die Ternärschicht besitzt die Zusammensetzung PbSnl4Cu 8 und wurde mit einem fluoroborathaltigen Galvanisierbad hergestellt. In der Ternärschicht sind deutlich Zinnanhäufungen 6a zu sehen. Insgesamt besitzt die Ternärschicht 5a eine inhomogene Struktur und eine rauhe Oberfläche.

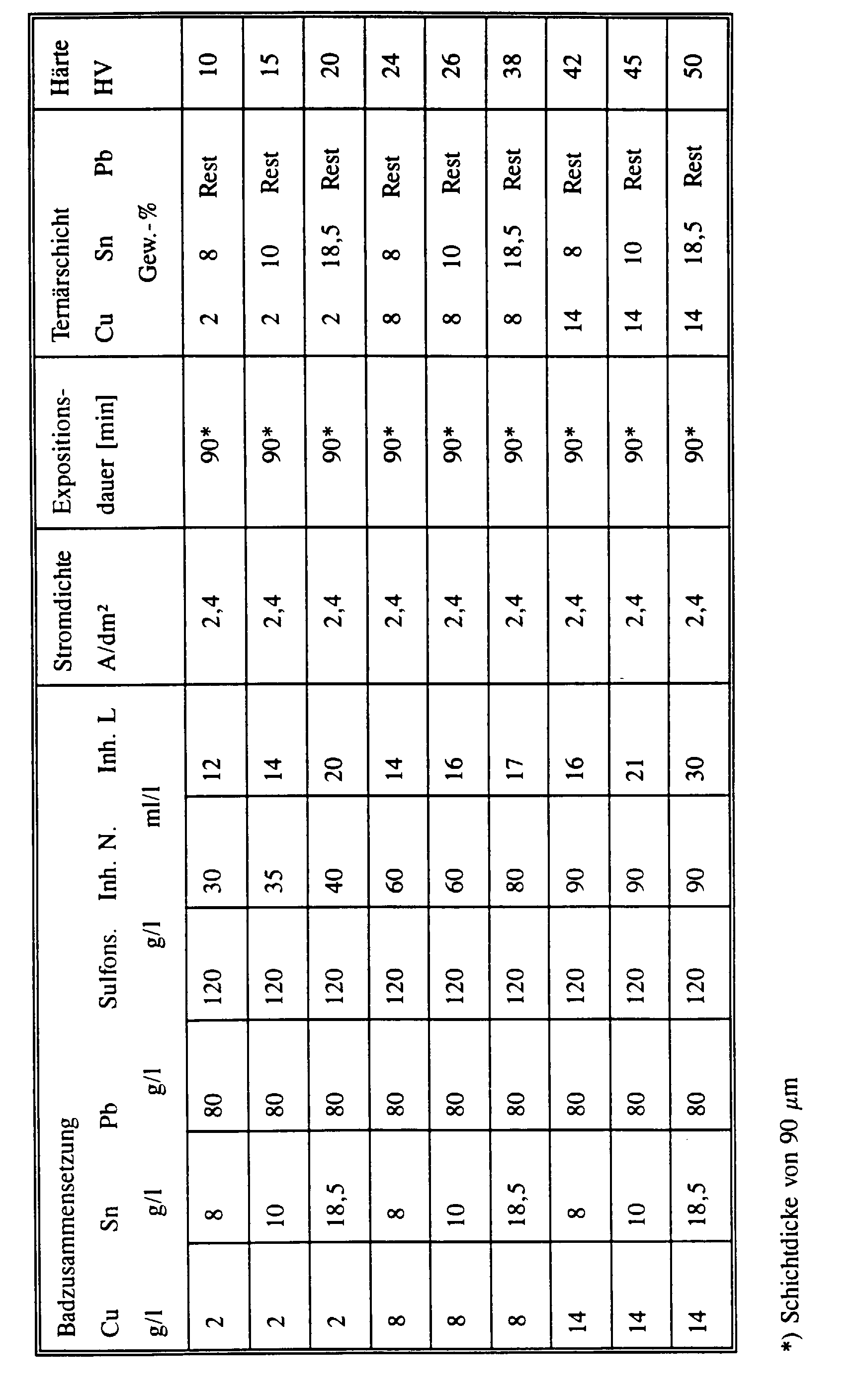

In der Figur 1b ist ein Schichtwerkstoff 1b gemäß der Erfindung dargestellt. Auf dem Stahlrücken 2b befindet sich ebenfalls eine Blei-Bronze-Schicht 3b, auf der unmittelbar, also ohne Nickeldamm, die Ternärschicht 5b aufgebracht ist, die aus 18,44 % Sn, 7,38 % Kupfer und Rest Blei besteht. In der hier dargestellten 1000-fachen Vergrößerung ist das Zinn deutlich als feinkristalline Abscheidung in homogener Verteilung zu sehen.

Insgesamt zeigt die Ternärschicht 5b einen guten Verbund und auch nach einer Wärmebehandlung bei 170°C über 1000 Std. war nur eine sehr geringe Zinndiffusion festzustellen. Die Härte dieser Ternärschicht 5b liegt bei 38 HV.

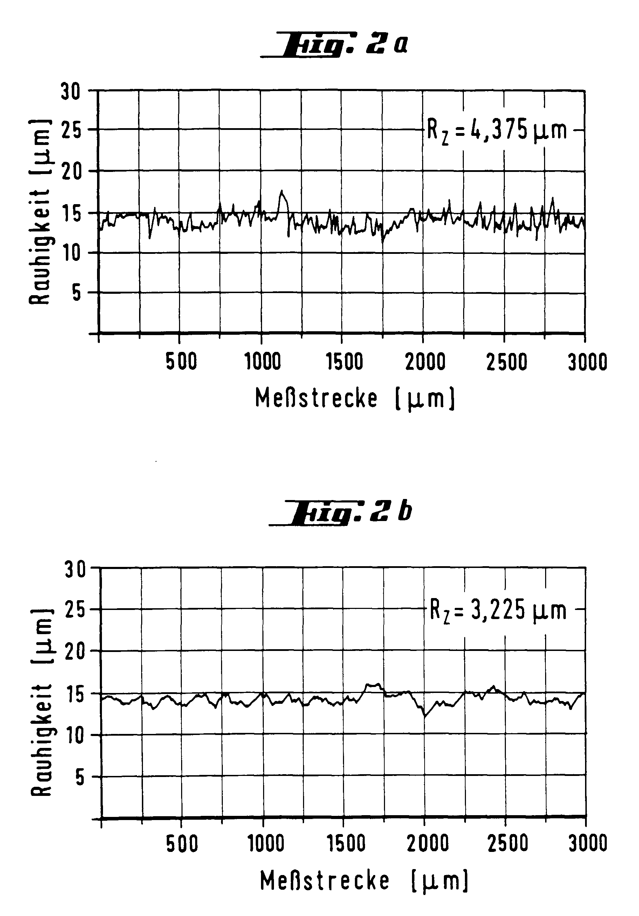

In den Figuren 2a und 2b ist die Oberflächenrauhigkeit der in den Figuren la und 1b dargestellten Schichtwerkstoffe aufgetragen. Es ist deutlich zu sehen, daß die in Figur 2a dargestellte Oberflächenrauhigkeit, die sich auf den Schichtwerkstoff gemäß Figur 1a bezieht, weitaus größer ist als die in Figur 2b. Die mittlere Rauhigkeit lag bei der in Figur 2a gezeigten Kurve bei RZ 4,375 µm und bei der in Figur 2b gezeigten Kurve bei RZ 3,225 µm.

Eine beispielhafte Badzusammensetzung sieht wie folgt aus:

| | |
|---|---|
| Gesamtmenge | 250 l |
| Pb | 50 - 100 g/l |
| Sn | 6 - 20 g/l |
| Cu | 2 - 16 g/l |
| freie Methansulfonsäure | 100 - 160 g/l |
| Netzmittel N | 40 - 100 ml/l |
| Netzmittel L | 5 - 25 ml/l |
| Netzmittel auf der Basis | |
| Polyglykolether | 0,01 - 0,05 g/l |

Mit einem Bad dieser Zusammensetzung wurde die nachfolgende Abscheidungstabelle erstellt.

**Abscheidungstabelle:**

| Expositionszeit in min | 2A/dm² | 3 A/dm² | 5 A/dm² | 10 A/dm² | 20 A/dm² |
|---|---|---|---|---|---|
| 15 | 16µm | 25µm | 40 µm | 80 µm | 160 µm |
| 30 | 32µm | 50 µm | 80 µm | 160 µm | 320 µm |
| 60 | 64µm | 100 µm | 160 µm | 320 µm | 640 µm |

Auch bei hohen Stromdichten von 20 A/dm², mit denen in relativ kurzer Zeit dicke Laufschichten aufgebracht werden können, konnte die gewünschte Legierungszusammensetzung eingehalten werden.

Weiterhin wurden die Schichten von Gleitlagern hinsichtlich ihrer Position in der für die Galvanisierung verwendeten Aufnahmevorrichtung untersucht.

| Position in der Aufnahme | Pb | Sn | Cu |
|---|---|---|---|
| oben | Rest | 11.89 | 5.83 |
| Mitte | Rest | 11.65 | 6.79 |
| unten | Rest | 11.21 | 6.74 |

Hieraus ist zu sehen, daß unabhängig von der Position des Gleitlagers in der Aufnahme sehr geringe Unterschiede in der Legierungszusammensetzung festzustellen sind.

### Bezugszeichen:

- 1a, b: Schichtwerkstoff
- 2a, b: Stahlrücken
- 3a, b: Blei-Bronze-Schicht
- 4a: Nickeldamm
- 5a, b: Ternärschicht
- 6a: Zinnanhäufungen

## Patentansprüche

1. Schichtwerkstoff (1b) für Gleitelemente, die mindestens einen Stützkörper (2b) und eine Laufschicht (5b) aus 8 - 18,5 Gew.-% Zinn, 2 - 16 Gew.-% Kupfer und als Rest Blei aufweisen, wobei das Zinn als feinkristalline Abscheidung in vollständig homogener Verteilung im Blei vorliegt.

2. Schichtwerkstoff nach Anspruch 1, dadurch gekennzeichnet, daß die Laufschicht (5b) eine Härte von 10 - 50 HV aufweist.

3. Schichtwerkstoff nach Anspruch 1 oder 2, bei dem die Laufschicht die Ternärschicht bildet, dadurch gekennzeichnet, daß die Laufschicht (5b) ohne Zwischenschicht auf einer Blei-Bronze-Schicht (3b) aufgebracht ist.

4. Verfahren zur Herstellung von Gleitelementen, bei dem auf das vorgefertigte Halbzeug eine Laufschicht aus Blei-Zinn-Kupfer galvanisch aufgebracht wird, bei dem ein ternäres, fluoroboratfreies Galvanisierbad ohne Glanzbildner unter Zusatz von nicht ionischen Netzmitteln und freier Alkylsulfonsäure verwendet wird, dadurch gekennzeichnet,
daß im Galvanisierbad ein eine Karbonsäure aufweisendes Kornverfeinerungsmittel und ein Fettsäurepolyglykolester verwendet wird.

5. Verfahren nach Anspruch 4, dadurch gekennzeichnet, daß ein Galvanisierbad verwendet wird, das Methansulfonsäure aufweist.

6. Verfahren nach einem der Ansprüche 4 bis 5, dadurch gekennzeichnet, daß das Galvanisierbad außer den abzuscheidenden Metallen 30 - 200 g/l freie Methansulfonsäure und 5 - 125 ml/l nicht ionische Netzmittel, 5 - 25 ml/l Kornverfeinerungsmittel und 0,01 - 1 g/l Fettsäurepolyglykolester enthält.

7. Verfahren nach Anspruch 6, dadurch gekennzeichnet, daß als nicht ionische Netzmittel Arylpolyglykolether und/oder Alkylarylpolyglykolether verwendet werden.

8. Verfahren nach einem der Ansprüche 4 bis 7, dadurch gekennzeichnet, daß während des Galvanisierprozesses Stromdichten von 2 bis 20 A/dm² eingesetzt werden.

9. Verfahren nach einem der Ansprüche 4 bis 8, dadurch gekennzeichnet, daß das Galvanisierbad während des Galvanisierprozesses bewegt wird.

10. Verfahren nach Anspruch 9, dadurch gekennzeichnet, daß das Galvanisierbad während des Galvanisierprozesses filtriert wird.

11. Verfahren nach einem der Ansprüche 4 bis 11, dadurch gekennzeichnet, daß das Galvanisierbad auf einer Temperatur unter 25°C gehalten wird.

12. Mittel zur Durchführung des Verfahrens nach einem der Ansprüche 4 bis 11, bestehend aus einem Galvanisierbad enthaltend 50 bis 100 g/l Blei als Blei-Methansulfonat, 6 bis 20 g/l Zinn als Zinn-Methansulfonat, 2 bis 16 g/l Kupfer als Kupfer-Methansulfonat. 30 bis 200 g/l freie Methansulfonsäure und 5 bis 125 ml/l nicht ionische Netzmittel, 5 - 25 ml/l Kornverfeinerungsmittel und Fettsäurepolyglykolester mit einem Anteil von 0,01 bis 1 g/l, aber keine Glanzbildner.

13. Mittel nach Anspruch 12, dadurch gekennzeichnet, daß die nicht ionischen Netzmittel Arylpolyglykolether und/oder Alkylarylpolyglykolether mit der Formel CₙHₙ₍ₙ₊₁₎-Ar-(OCH₂-CH₂)ₘ-OCH₂-CH₃, in der n = 0 bis 15, m = 5 - 39 und Ar einen aromatischen Rest darstellt, und ein eine Karbonsäure aufweisendes Kornverfeinerungsmittel sind.

14. Mittel nach Anspruch 12 oder 13, dadurch gekennzeichnet, daß das Kornverfeinerungsmittel eine α-β-ungesättigte Carbonsäure aufweist, mit der allgemeinen Formel 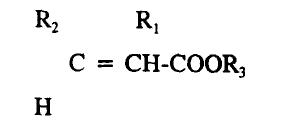 in der R₁ und R₂ gleich oder verschieden sind und Wasserstoff oder niedrige Alkylgruppen mit 1 bis 3 C-Atomen und R₃-Wasserstoff oder niedrige Alkylgruppen mit 1 bis 5-C-Atomen darstellt.

15. Mittel nach Anspruch 12 oder 13, dadurch gekennzeichnet, daß der Anteil des Arylpolyglykolethers und/oder des Alkylarylpolyglykolethers 40 - 100 ml/l und der des Kornverfeinerungsmittels 5 - 15 ml/l beträgt.

## Claims

1. A laminate material (1b) for sliding elements which have at least a support body (2b) and a running layer (5b) of 8 - 18.5% by weight of tin, 2 - 16% by weight of copper and lead as the balance, wherein the tin is present as a finely crystalline deposit in completely homogeneous distribution in the lead.

2. A laminate material according to claim 1 characterised in that the running layer (5b) is of a hardness of 10 - 50 VH.

3. A laminate material according to claim 1 or claim 2 wherein the running layer forms a ternary layer, characterised in that the running layer (5b) is applied without an intermediate layer to a lead-bronze layer (3b).

4. A process for the production of sliding elements in which a running layer of lead-tin-copper is galvanically applied to the prefabricated semi-manufactured article, and wherein a ternary, fluoroborate-free galvanising bath without brightener is employed using non-ionic wetting agents and free alkylsulphonic acid, characterised in that a grain-refining agent having a carboxylic acid and a fatty acid polyglycol ester are used in the galvanising bath.

5. A process according to claim 4 characterised in that a galvanising bath which has methane sulphonic acid is used.

6. A process according to one of claims 4 and 5 characterised in that besides the metals to be deposited the galvanising bath contains 30 - 200 g/l of free methane sulphonic acid and 5 - 125 ml/l of non-ionic wetting agents, 5 - 25 ml/l of grain-refining agent and 0.01 - 1 g/l of fatty acid polyglycol ester.

7. A process according to claim 6 characterised in that aryl polyglycol ether and/or alkylaryl polyglycol ether are used as non-ionic wetting agents.

8. A process according to one of claims 4 to 7 characterised in that current densities of 2 to 20 A/dm² are used during the galvanising procedure.

9. A process according to one of claims 4 to 8 characterised in that the galvanising bath is moved during the galvanising procedure.

10. A process according to claim 9 characterised in that the galvanising bath is filtered during the galvanising procedure.

11. A process according to one of claims 4 to 11 characterised in that the galvanising bath is held at a temperature below 25°C.

12. Means for carrying out the process according to one of claims 4 to 11 comprising a galvanising bath containing 50 to 100 g/l of lead in the form of lead methane sulphonate. 6 to 20 g/l of tin in the form of tin methane sulphonate. 2 to 16 g/l of copper in the form of copper methane sulphonate. 30 to 200 g/l of free methane sulphonic acid and 5 to 125 ml/l of non-ionic wetting agents. 5 - 25 ml/l of grain-refining agent and fatty acid polyglycol ester with a proportion of 0.01 to 1 g/l, but no brighteners.

13. Means according to claim 12 characterised in that the non-ionic wetting agents are aryl polyglycol ether and/or alkylaryl polyglycol ether with the formula CₙH₍ₙ₊₁₎-Ar-(OCH₂-CH₂)ₘ-OCH₂-CH₃, in which n = 0 to 15, m = 5 - 39 and Ar represents an aromatic residue, and a grain-refining agent having a carboxylic acid.

14. Means according to claim 12 or claim 13 characterised in that the grain-refining agent has a α-β-unsaturated carboxylic acid having the general formula 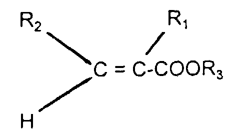 in which R₁ and R₂ are the same or different and represent hydrogen or low alkyl groups with 1 to 3 C-atoms and R₃ represents hydrogen or low alkyl groups with 1 to 5 C-atoms.

15. Means according to claim 12 or claim 13 characterised in that the proportion of the aryl polyglycol ether and/or the alkylaryl polyglycol ether is 40 - 100 ml/l and that of the grain-refining agent is 5 - 15 ml/l.

## Revendications

1. Matériau stratifié (1b) pour éléments de glissement, qui présentent au moins un corps d'appui (2b) et une couche antifriction (5b) composée de 8 à 18,5 % en masse d'étain, de 2 à 16 % en masse de cuivre et pour le reste de plomb, l'étain se présentant sous la forme d'un dépôt de fins cristaux répartis dans le plomb de façon totalement homogène.

2. Matériau stratifié selon la revendication 1, caractérisé en ce que la couche antifriction (5b) présente une dureté comprise entre 10 et 50 HV.

3. Matériau stratifié selon la revendication 1 ou 2, dans lequel la couche antifriction forme la couche ternaire, caractérisé en ce que la couche antifriction (5b) est appliquée sans couche intermédiaire sur une couche de plomb-bronze (3b).

4. Procédé de fabrication d'éléments de glissement, dans lequel une couche antifriction composée de plomb-étain-cuivre est appliquée par dépôt électrolytique sur le produit semi-fini préfabriqué, dans lequel un bain de galvanisation ternaire exempt de fluoroborate est utilisé sans lustrant en ajoutant des agents mouillants non ioniques et de l'acide sulfonique d'alkyle libre, caractérisé en ce que
dans le bain de galvanisation est utilisé un agent d'amélioration du grain comportant de l'acide carboxylique et un ester polyglycolique d'acide gras.

5. Procédé selon la revendication 4, caractérisé en ce que l'on utilise un bain de galvanisation qui comprend de l'acide méthane-sulfonique.

6. Procédé selon l'une des revendications 4 à 5, caractérisé en ce que le bain de galvanisation, outre les métaux à déposer, comprend 30 à 200 g/l d'acide méthane-sulfonique libre et 5 à 125 ml/l d'agent mouillant non ionique, 5 à 25 ml/l d'agent d'amélioration du grain et 0,01 à 1 g/l d'ester polyglycolique d'acide gras.

7. Procédé selon la revendication 6, caractérisé en ce que l'on utilise comme agent mouillant non ionique un éther polyglycolique d'aryle et/ou un éther polyglycolique d'alkylaryle.

8. Procédé selon l'une des revendications 4 à 7, caractérisé en ce que l'on applique, pendant le procédé de galvanisation, des densités de courant comprises entre 2 et 20 A/dm².

9. Procédé selon l'une des revendications 4 à 8, caractérisé en ce que le bain de galvanisation est agité pendant le procédé de galvanisation.

10. Procédé selon la revendication 9, caractérisé en ce que le bain de galvanisation est filtré pendant le procédé de galvanisation.

11. Procédé selon l'une des revendications 4 à 11, caractérisé en ce que le bain de galvanisation est maintenu à une température inférieure à 25 °C.

12. Agent permettant de réaliser le procédé selon l'une des revendications 4 à 11, composé d'un bain de galvanisation contenant 50 à 100 g/l de plomb sous forme de méthane-sulfonate de plomb, 6 à 20 g/l d'étain sous forme méthane-sulfonate d'étain, 2 à 16 g/l de cuivre sous forme de méthane-sulfonate de cuivre, 30 à 200 g/l d'acide méthane-sulfonique libre et 5 à 125 ml/l d'agent mouillant non ionique, 5 à 25 ml/l d'agent d'amélioration du grain et un ester polyglycolique d'acide gras dans une proportion comprise entre 0,01 et 1 g/l, mais ne contenant pas de lustrant.

13. Agent selon la revendication 12, caractérisé en ce que les agents mouillants non ioniques sont un éther polyglycolique d'aryle et/ou un éther polyglycolique d'akylaryle de formule CₙH₍ₙ₊₁₎-Ar-(OCH₂-CH₂)ₘ-OCH₂-CH₃, dans laquelle n = 0 à 15, m = 5 à 39 et Ar représente un résidu aromatique, et un agent d'amélioration du grain contenant de l'acide carboxylique.

14. Agent selon la revendication 12 ou 13, caractérisé en ce que l'agent d'amélioration du grain présente un acide carboxylique α,β-insaturé, de formule générale 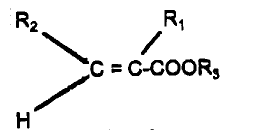 dans laquelle R₁ et R₂ sont identiques ou différents et représentent un atome d'hydrogène ou des groupes alkyle inférieur comprenant 1 à 3 atomes de C, et R₃ représente un atome d'hydrogène ou des groupes alkyle inférieur comprenant 1 à 5 atomes de C.

15. Agent selon la revendication 12 ou 13, caractérisé en ce que la proportion de l'éther polyglycolique d'aryle et/ou de l'éther polyglycolique d'alkylaryle est comprise entre 40 et 100 ml/l, et celle de l'agent d'amélioration du grain entre 5 et 15 ml/l.
